# FASCICULE DE BREVET EUROPEEN

(11) **EP 3 894 242 B1**
(45) Date de publication et mention de la délivrance du brevet: **22.02.2023**
(21) Numéro de dépôt: 19824007.9
(22) Date de dépôt: 10.12.2019
(51) Int. Cl.: B60C 27/06, B60C 27/20

(54) **DISPOSITIF D'AIDE À LA TRACTION AVEC CHAÎNES ET FIXATION LATERALE**
TRAKTIONSHILFE MIT KETTENSTRÄNGEN UND SEITLICHER BEFESTIGUNG
TRACTION DEVICE HAVING CHAIN PORTIONS AND A LATERAL FIXATION

(30) Priorité: 14.12.2018 FR 1872990
(43) Date de publication de la demande: 20.10.2021
(73) Titulaire: Compagnie Générale des Etablissements Michelin, 63000 Clermont-Ferrand (FR)
(72) Inventeur: SOUYRI, Philippe, 63040 Clermont-Ferrand Cedex 9 (FR); DEAN, David, 63040 Clermont-Ferrand Cedex 9 (FR); IGIER, Emmanuel, 63040 Clermont-Ferrand Cedex 9 (FR); BLOUIN, Damien, 63040 Clermont-Ferrand Cedex 9 (FR)
(74) Mandataire: Boyer, Chris Michel
(86) Numéro de dépôt international: PCT/IB2019/060617
(87) Numéro de publication internationale: WO 2020/121194

(56) Documents cités:
- EP-A1- 2 210 750
- WO-A1-03/064191
- DE-A1-102010 018 251
- GB-A- 2 433 478

## Description

### DOMAINE TECHNIQUE DE L'INVENTION

La présente invention concerne un dispositif d'aide à la traction pour agencement en périphérie d'une bande de roulement d'un pneumatique monté sur une jante, comprenant une bande de traction prévue pour enroulement autour de la bande de roulement du pneumatique, un module de fixation latérale à la jante, ladite bande de traction comprenant une pluralité de blocs de support de chaînes agencés les uns à la suite des autres et sur lesquels au moins deux chaînes circonférentielles sont fixées.

### ETAT DE LA TECHNIQUE ANTERIEURE

**On** connaît de nombreux types de dispositifs d'aide à la traction pour les véhicules DE102010018251, WO03/064191, GB2433478A, EP2210750B1. Ces dispositifs sont en général prévus pour utilisation occasionnelle afin de dépanner un véhicule embourbé sur une route enneigée, ou en prévision d'un roulage de courte durée sur une route aux conditions hivernales difficiles.

Le document DE102010018251 reprend les caractéristiques du préambule de la revendication 1.

Selon les cas, et selon les législations des pays concernant l'utilisation de pneumatiques hivernaux, les dispositifs d'aide à la traction peuvent être utilisés avec des pneumatiques hiver ou été.

Dans tous les cas, ces dispositifs permettent de positionner sur la bande de roulement des pneumatiques une structure complémentaire destinée à améliorer les performances de traction du véhicule.

De nombreux dispositifs utilisent des chaînes, agencées pour recouvrir la bande de roulement et une partie des flancs des pneumatiques. Ces dispositifs présentent des performances honorables, mais au détriment de l'ergonomie. En effet, les opérations de montage et démontage des chaînes à neige sont souvent fastidieuses et longues.

Par exemple, le document EP0298905 décrit un dispositif antidérapant pour roues de véhicule comprenant des portions circonférentielles de chaînes espacées entre elles par des blocs en caoutchouc ou autre matériau moulable. Des sections de chaînes transversales aux chaînes circonférentielles s'étendent entre les blocs et permettent de maintenir la chaîne en position sur le pneumatique. Ce type d'agencement nécessite des opérations de montage et démontage relativement fastidieuses, et procure une efficacité de traction perfectible.

Pour pallier ces inconvénients, d'autres types de dispositifs ont été conçus. On connaît par exemple des dispositifs en tissus élastique renforcé ou en câblage textile, prévus pour encapsuler les pneumatiques. Les opérations de montage/démontage de tels dispositifs sont effectuées de façon simple et rapide. L'efficacité en traction reste toutefois limitée.

On connaît également des dispositifs prévus pour fixation latérale sur la jante du véhicule. Ces dispositifs permettent aussi de faciliter les opérations de montage et démontage.

Toutefois, de manière générale, il a été constaté que les performances des dispositifs d'aide à la traction sur sol enneigé sont souvent déficientes. Il existe donc un besoin pour un dispositif d'aide à la traction qui soit facile à monter et démonter, mais surtout qui présente des performances de traction optimisées.

Par exemple le document FR2977832 décrit des chaînes à neige à montage latéral sur la jante d'un véhicule. Le corps central du système est plaqué sur la partie extérieure de la roue à l'aide d'élastiques. Huit bras sont reliés au corps, de façon pivotante pour se déployer autour de la roue et l'envelopper. Le passage des bras sur la bande de roulement se fait à l'aide d'une roulette. Une chaîne comportant des croisillons s'étend entre chaque bras au niveau de la bande de roulement du pneumatique. Ce dispositif est complexe, fragile et d'une efficacité incertaine.

Le document FR3017336 décrit un patin monolithique pour chemin de roulement d'un dispositif antidérapant pour pneumatique de véhicule. Le patin comporte au moins un insert rigide présentant une direction longitudinale et des moyens de solidarisation à des éléments de jonction des patins entre eux. Il comporte également une enveloppe réalisée en matériau polymère dans lequel un insert rigide est au moins partiellement noyé. Le patin comporte une portion centrale comprenant une pluralité d'ouvertures parfois débouchantes et des protubérances de forme rectiligne, allongée. Les moyens de solidarisation sont des agrafes serties ou rivetées entre elles, formant une boucle passant au travers des éléments de jonction et du patin antidérapant. Les caractéristiques de ce dispositif lui confèrent des aptitudes limitées en regard des performances de traction recherchées.

Pour pallier les différents inconvénients préalablement évoqués, l'invention prévoit différents moyens techniques.

### EXPOSE DE L'INVENTION

Tout d'abord, un premier objectif de l'invention consiste à prévoir un dispositif d'aide à la traction véritablement performant dans des conditions hivernales difficiles, en particulier sur sol enneigé.

Un autre objectif de l'invention consiste à prévoir un dispositif d'aide à la traction efficace et performant quelque soit le type de pneumatique utilisé, y compris des pneumatiques été.

Un autre objectif de l'invention consiste à prévoir un dispositif d'aide à la traction facile et rapide à installer/désinstaller par quiconque, sans requérir de compétences particulières.

Encore un autre objectif de l'invention consiste à prévoir un dispositif d'aide à la traction adaptable sur tous les véhicules, même les plus récents.

Encore un autre objectif de l'invention consiste à prévoir un dispositif d'aide à la traction avec des caractéristiques d'adhérence optimales.

Pour ce faire, l'invention prévoit un dispositif d'aide à la traction pour agencement en périphérie d'une bande de roulement d'un pneumatique monté sur une jante, comprenant une bande de traction se prolongeant le long d'un axe de traction T-T et prévue pour enroulement autour de la bande de roulement du pneumatique, un module de fixation latérale conçu pour fixer latéralement ladite bande de traction à la jante, ladite bande de traction comprenant une pluralité de blocs de support de chaînes en polyuréthane agencés les uns à la suite des autres et sur lesquels au moins deux chaînes circonférentielles sont fixées, au moins une portion des blocs de support comportant un agencement de sculptures pourvues d'au moins une rainure et d'au moins une incision transversales à l'axe de traction T-T et agencées sur la face externe des blocs de support et venues de matière avec le bloc de support de chaîne.

Les blocs avec sculptures procurent des caractéristiques de traction complémentaires par rapport aux chaînes à neige connues, pour une efficacité améliorée.

Selon un mode de réalisation avantageux, l'agencement de sculptures comporte également un alignement de sculptures en forme de dents de scie disposées sur les faces latérales des blocs de support. Ces éléments de sculpture procurent un effet anti-glissement latéral.

Selon encore un mode de réalisation avantageux, l'agencement de sculptures comporte également un alignement de sculptures en forme de dents de scie disposées sur la face interne des blocs de support. Ces éléments de sculpture permettent d'augmenter la cohésion entre la bande de traction et le pneumatique. Il en résulte une plus grande efficacité. Enfin, la bande de traction est plus stable latéralement.

Selon encore un mode de réalisation avantageux, l'agencement de sculptures comporte également un alignement de sculptures en forme de dents de scie disposées sur la zone d'épaule des blocs de support. Ces éléments de sculpture permettent d'augmenter la surface efficace de la bande de traction. Ce type de sculptures favorise la stabilité latérale de la bande de traction.

De manière avantageuse, les chaînes sont reliées aux blocs par des passages prévus dans chacun des blocs. Ce mode de coopération entre les blocs et les chaînes est simple à mettre en oeuvre, fiable, robuste et peu coûteux.

Egalement de manière avantageuse, des blocs de positionnement des chaînes sont intercalés entre deux blocs de support de chaînes, lesdits blocs de positionnement comportant également un agencement de sculpture venu de matière avec le bloc. Cette mise en oeuvre favorise encore le maintien de l'ensemble.

Selon encore un mode de réalisation avantageux, le module de fixation latérale comprend un flasque central portant une pluralité de bras radiaux coopérant latéralement avec la bande de traction, les blocs de support étant reliés auxdits bras radiaux, lesdits blocs se prolongeant par une zone d'épaule prévue pour longer le profil de l'épaule du pneumatique sur lequel le dispositif est monté, lesdites zones d'épaules comportant un agencement de sculptures venues de matière avec le bloc.

Selon un autre mode de réalisation, le flasque porte au moins une tige de fixation à une roue d'un véhicule, et une manette de positionnement permettant de rapprocher ledit flasque de la roue du véhicule.

La fixation latérale, c'est à dire par le côté externe de la roue, simplifie considérablement les processus de mise en place et de retrait du dispositif d'aide à la traction. Il n'est plus requis de positionner des éléments de serrage de part et d'autre de la roue comme sur des chaînes traditionnelles. La bande de traction est simplement positionnée sur la bande de roulement. La fixation latérale avec serrage contre la jante permet de fournir à la bande de traction une série de points d'ancrages en bordure de la bande de roulement. La bande de traction est ainsi mise en place et maintenue par les bras radiaux.

L'utilisateur a donc facilement accès à tous les éléments du système et peut donc procéder facilement et rapidement aux opérations de montage/démontage.

L'espace requis dans le logement de roue du véhicule pour positionner le dispositif et effectuer les manipulations pour le montage et démontage est minimisé. Ainsi, le dispositif de traction est compatible avec une grande majorité de véhicules, incluant certains véhicules récents pour lesquels l'espace disponible entre la bande de roulement et la carrosserie est relativement faible.

### DESCRIPTION DES FIGURES

Tous les détails de réalisation sont donnés dans la description qui suit, complétée par les figures 1 à 5, présentées uniquement à des fins d'exemples non limitatifs, et dans lesquelles :
- la figure 1 est une représentation schématique d'un exemple de dispositif d'aide à la traction mis en place sur un pneumatique ;
- la figure 2 montre une variante de réalisation du dispositif d'aide à la traction de la figure 1 ;
- les figures 3a, 3b, 3c et 3d illustrent un exemple de bloc de support de chaîne pour un dispositif d'aide à la traction ;
- les figures 4 et 5 sont des représentations schématiques d'exemples de modules de fixation latérale pour un dispositif d'aide à la traction.

### DESCRIPTION DETAILLEE DE L'INVENTION

### DEFINITIONS

PASSAGES : par « passage », on entend une creusure faite dans un bloc, préférablement sur les bords des blocs, de la largeur des maillons d'une chaîne, prévue pour recevoir guider et fixer la chaîne au bloc.

Par « incision », on entend une découpe ou fente mince (par exemple entre 0,1 et 2 mm) et allongée pratiquée dans un bloc.

Par « rainure », on entend une découpe ou fente d'une largeur au moins deux fois supérieure à celle d'une incision, pratiquée dans un bloc.

### BANDE DE TRACTION

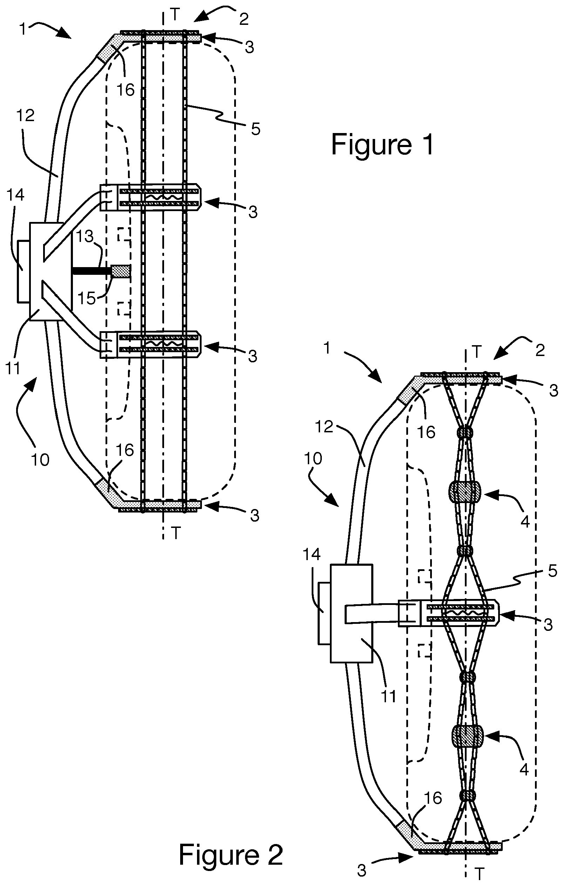

Les figures 1 et 2 montrent une portion d'une bande de traction 2 destinée à un dispositif 1 d'aide à la traction. La bande de traction 2 comporte une pluralité de blocs 3 de support de chaînes 5 agencés les uns à la suite des autres tel qu'illustré à la figure 1. Dans l'exemple de réalisation de la figure 2, la bande de traction comporte une pluralité de blocs 3 de support et une pluralité de blocs 4 de positionnement. Dans cet exemple, chacun des blocs 4 de positionnement est intercalé entre deux blocs 3 de support. Au moins deux chaînes 5 circonférentielles sont fixées aux blocs. Les blocs sont agencés le long d'un axe de traction T-T illustré aux figures 1 et 2. Des passages 6 sont prévus sur les bords de chacun des blocs 3 et 4 pour permettre le cheminement des chaînes 5 et ainsi permettre l'alignement des blocs le long de l'axe de traction T-T. La bande de traction 2 est conçue pour être placée sur une bande de roulement d'un pneumatique avec son axe de traction T-T sensiblement aligné avec l'axe circonférentiel de roulement de la roue. La bande de traction forme ainsi une couche de traction superposée à la bande de roulement du pneumatique. Les caractéristiques de traction de la bande de traction, spécifiquement adaptées pour les conditions hivernales difficiles, permettent d'améliorer la traction globale du véhicule en particulier sur des routes enneigées.

### MODULE DE FIXATION LATERALE

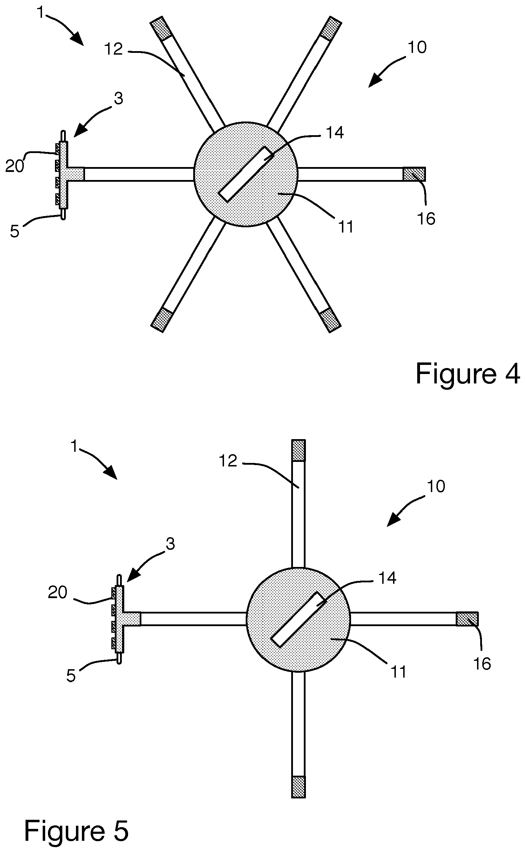

Les figures 1 à 5 illustrent un exemple de module 10 de fixation latérale. Ce module permet de fixer et maintenir une bande de traction 2 à une jante d'un véhicule lorsque la bande de traction 2 est agencée contre la bande de roulement du pneumatique monté sur cette jante. La fixation est mise en oeuvre du côté du bord extérieur de la roue, le long de la jante et du flanc extérieur du pneumatique. Ce mode de fixation simplifie considérablement la mise en place de la bande de traction en comparaison avec les chaînes à neige traditionnelles. Tel qu'illustré aux figures 4 et 5, un flasque central 11 porte une pluralité de bras 12 radiaux s'étendant depuis le flasque jusqu'à une distance suffisante pour permettre le positionnement des blocs 3 et/ou 4 selon le mode de réalisation, de la bande de traction 2 sur la bande de roulement du pneumatique. Dans l'exemple illustré à la figure 4, le module de fixation comprend six bras radiaux répartis angulairement avec un écart de 60 degrés entre eux. En variante, tel qu'illustré à la figure 5, le module de fixation comprend quatre bras 12 radiaux répartis angulairement avec un écart de 90 degrés entre eux. Chacun des bras 12 radiaux est fixé à un bloc 3 de la bande de traction par l'entremise d'une articulation 16 de bras radial située au niveau de la zone d'épaule. Ces articulations sont souples, et permettent de déplacer angulairement les blocs par exemple pour les soulever au-dessus de la bande de roulement. En variante, le nombre de bras radiaux varie, et est de préférence supérieur ou égal à trois. L'écart angulaire entre chacun des bras est sensiblement identique sur toute la circonférence de la bande de traction. Encore en variante, on remplace les bras 12 radiaux par un disque de fixation qui se prolonge radialement entre le flasque 11 et la bande de traction. Ce disque présente l'avantage de permettre la fixation de l'ensemble des blocs, facilite le montage et procure une plus grande rigidité à l'ensemble.

Le flasque 11 comprend une manette 14 placée du côté extérieur, reliée à au moins une tige 13 de fixation, du côté intérieur du flasque. Chaque tige de fixation coopère à son extrémité libre avec un adaptateur 15, conçu pour fixation à la jante de la roue, par exemple au niveau des écrous de fixation de la roue. La manette coopère avec la ou les tiges 13 de fixation et permet de tirer ces dernières vers le flasque, par exemple en tournant la manette. Cette action permet de rapprocher le flasque 11, les bras radiaux 12 et la bande de traction vers le pneumatique, jusqu'à ce que la bande de traction 2 se trouve sur la bande de roulement de la roue tel que montré aux figures 1 et 2. Le démontage du dispositif de traction est effectué en sens inverse, en repoussant la ou les tiges 13 vers la jante, ce qui permet d'éloigner les bras radiaux de la roue, en tirant la bande de traction hors de la bande de roulement.

Le flasque 11 et la manette 14 sont avantageusement réalisés en matériau polymère. Les bras peuvent être en matériaux polymère, ou métallique, ou élastomère renforcés.

### BLOC DE SUPPORT DE CHAÎNE

Tel qu'illustré aux figures 1 à 3c, les blocs 3 de support sont de préférence de forme allongée, selon l'axe b-b, sensiblement transversal à l'axe T-T de traction. Chacun des blocs s'étend de l'articulation 16 du bras 12 radial, jusqu'à au moins 30% de la bande de roulement du pneumatique et plus préférentiellement jusqu'à au moins 50% de la largeur de la bande de roulement. Les blocs sont conçus en matériau élastomère, de préférence en polyuréthane.

Afin d'optimiser les caractéristiques de traction du dispositif 1 d'aide à la traction, au moins une portion des blocs 3 de support de chaînes 5 comportent un agencement 20 de sculptures comprenant au moins une rainure 21 et au moins une incision 22 agencées transversalement à l'axe T-T de traction. Dans l'exemple illustré, le bloc 3 comprend deux rainures 21 et une incision 22 interposée entre les deux rainures 21. Les rainures 21 et l'incision 22 sont venues de matière avec le bloc 3. Un tel agencement permet d'améliorer les caractéristiques d'adhérence et de traction du dispositif 1 d'aide à la traction.

Tel qu'illustré, le bloc comprend également un alignement 23 de sculptures en dents de scie agencé sur les faces latérales 9 du bloc. Les arêtes du bloc sont orientées vers le moyen 10 de fixation latérale. Ces sculptures permettent d'améliorer les caractéristiques de traction transversale, et en particulier de pousser ou tracter les blocs 3 vers l'intérieur du véhicule, pour éviter de générer trop d'efforts contre le moyen 10 de fixation latérale.

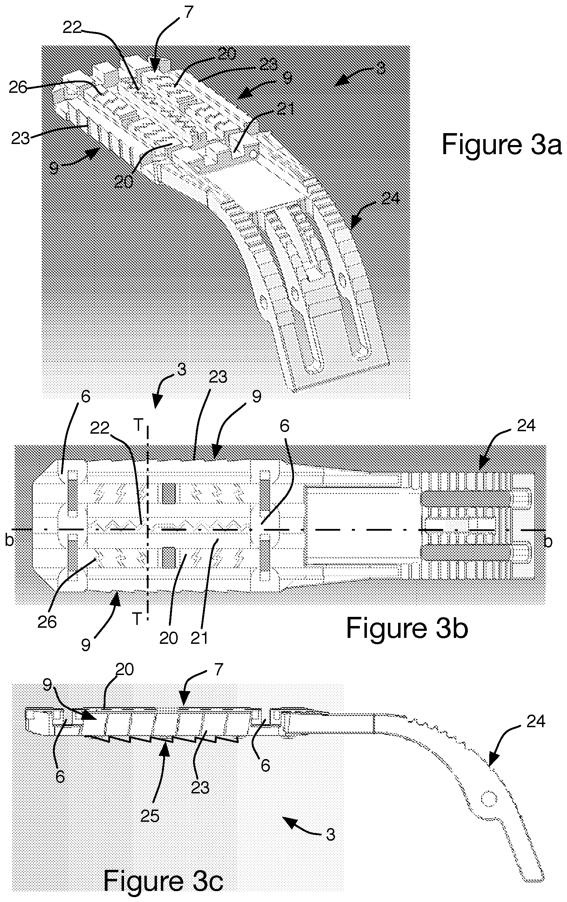

Dans l'exemple illustré à la figure 3c, le bloc comprend également un alignement 25 de sculptures en dents de dents de scie agencé sur la face interne 8 du bloc. Les arêtes du bloc sont orientées vers le moyen 10 de fixation latérale. Ces sculptures permettent d'améliorer le maintien latéral des blocs contre la surface de la bande de roulement, afin de minimiser les déplacements latéraux des blocs.

La combinaison des rainures 21 et de l'incision 22 transversales sur la face externe 7 ou face de contact avec la route avec l'alignement 25 de sculptures disposé sur la face interne du bloc 3 permet de transmettre de façon efficace l'effort généré par la roue vers le sol.

Tel qu'illustré, le bloc comprend enfin un alignement 24 de sculptures au moins en partie en forme de dents de scie agencé en zone d'épaule du bloc. Comme précédemment, les arêtes du bloc sont orientées vers le moyen 10 de fixation latérale. Ces sculptures permettent d'améliorer les caractéristiques de traction transversale, et en particulier de pousser ou tracter les blocs 3 vers l'intérieur du véhicule, pour éviter de générer trop d'efforts contre le moyen 10 de fixation latérale.

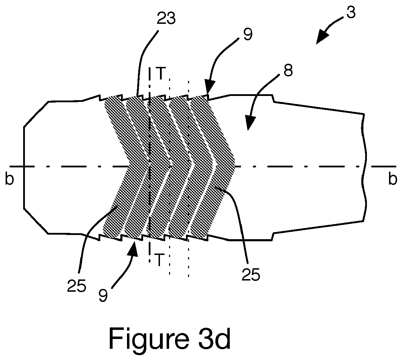

La combinaison des alignements 23 de faces latérales 9 et 24 de zone d'épaule procure un effet de plaquage du bloc 3 au niveau de sa zone d'épaule contre le pneumatique et du module 10 de fixation vers la jante du véhicule. La présence de ces deux alignements complémentaires permet par ailleurs d'élargir la zone de traction. En variante, des alignement 25 de sculptures sont agencées sous le bloc 3, sur la face interne 8, afin d'amplifier encore cet effet de maintien latéral du dispositif d'aide à la traction. Tel qu'illustré à la figure 3c, les alignements 25 sont avantageusement prévus avec un profil en forme de dents de scie, les arêtes des dents étant orientées vers le module 10 de fixation latérale. Cet agencement favorise le maintien des blocs sur la bande de roulement en minimisant le risque de glissement vers l'extérieur de la roue. Tel qu'illustré à la figure 3d, les alignements 25 de sculpture sont avantageusement disposés en V, avec la pointe du V orientée vers le module 10 de fixation latérale. Tel qu'illustré à la figure 3d, l'angle formé par les V est tel que l'écart selon l'axe b-b du bloc entre la pointe d'un V et l'extrémité extérieure du V est au moins égal au pas des dents de scie.

La hauteur des arêtes des dents de scie 23, 24 et 25 est d'au moins 1 mm, et de préférence d'au moins 2 mm.

La profondeur des rainures 21 et des incisions 22 est d'au moins 30% et de préférence au moins 50% de l'épaisseur moyenne du bloc. Par exemple, pour un bloc d'une épaisseur moyenne de 8 mm, la hauteur est d'au moins 2.5 mm et plus préférentiellement d'au moins 4 mm.

### BLOC DE POSITIONNEMENT

Tel qu'illustré à la figure 2, les blocs 3 de support et les blocs 4 de positionnement sont disposés en alternance pour former la bande de traction 2. Cette alternance de blocs 3 et 4 permet de maintenir les chaînes convenablement en place sur la bande de roulement du pneumatique. Les blocs 4 de positionnement peuvent aussi comporter des agencements 20 de sculptures venus de matière avec le bloc. Les agencements 20 des blocs 4 de positionnement sont de préférence similaires aux agencements 7 des blocs 3 de support afin d'augmenter l'effet de traction et le maintien latéral.

**Numéros de référence employés sur les figures**

| | |
|---|---|
| 1 | Dispositif d'aide à la traction |
| 2 | Bande de traction |
| 3 | Bloc de support de chaîne |
| 4 | Bloc de positionnement |
| 5 | Chaîne |
| 6 | Passage de chaîne |
| 7 | Face externe de bloc de support |
| 8 | Face interne de bloc de support |
| 9 | Face latérale de bloc de support |
| 10 | Module de fixation latérale |
| 11 | Flasque |
| 12 | Bras radial |
| 13 | Tige de fixation |
| 14 | Manette |
| 15 | Adaptateur |
| 16 | Articulation de bloc de support de chaîne |
| 20 | Agencement de sculpture de bloc de support |
| 21 | Rainure transversale à l'axe T-T |
| 22 | Incision transversale à l'axe T-T |
| 23 | Alignement de sculptures en forme de dents de scie sur face latérale |
| 24 | Alignement de sculptures en forme de dents de scie en zone d'épaule |
| 25 | Alignement de sculptures en forme de dents de scie sur face interne |
| 26 | Incision coaxiale à l'axe T-T |

## Revendications

1. Dispositif (1) d'aide à la traction pour agencement en périphérie d'une bande de roulement d'un pneumatique monté sur une jante, comprenant une bande de traction (2) se prolongeant le long d'un axe de traction T-T et prévue pour enroulement autour de la bande de roulement du pneumatique, un module (10) de fixation latérale conçu pour fixer latéralement ladite bande de traction (2) à la jante, ladite bande de traction comprenant une pluralité de blocs (3) de support de chaînes (5) agencés les uns à la suite des autres et sur lesquels au moins deux chaînes (5) circonférentielles sont fixées, ledit dispositif étant **caractérisé en ce que** au moins une portion des blocs (3) de support comportent un agencement (20) de sculptures pourvues d'au moins une rainure (21) et d'au moins une incision (22) transversales à l'axe de traction T-T et agencées sur la face externe (7) des blocs (3) de support et venues de matière avec le bloc (3) de support de chaîne et **en ce que** l'agencement (20) de sculptures comporte également un alignement (23) de sculptures en forme de dents de scie disposées sur les faces latérales (9) des blocs de support.

2. Dispositif (1) d'aide à la traction selon la revendication 1, dans lequel l'agencement (20) de sculptures comporte également un alignement (25) de sculptures en forme de dents de scie disposées sur la face interne (8) des blocs (3) de support.

3. Dispositif (1) d'aide à la traction selon l'une quelconque l'une des revendications 1 ou 2, dans lequel l'agencement (20) de sculptures comporte également un alignement (24) de sculptures en forme de dents de scie disposées sur la zone d'épaule des blocs (3) de support.

4. Dispositif (1) d'aide à la traction selon l'une quelconque des revendications 1 à 3, dans lequel les chaînes (5) sont reliées aux blocs (3) par des passages (6) prévus dans chacun des blocs.

5. Dispositif (1) d'aide à la traction selon l'une quelconque des revendications 1 à 4, dans lequel des blocs (4) de positionnement des chaînes sont intercalés entre deux blocs (3) de support de chaînes, lesdits blocs (4) de positionnement comportant également un agencement de sculpture venu de matière avec le bloc.

6. Dispositif (1) d'aide à la traction selon l'une quelconque des revendications précédentes, dans lequel le module (10) de fixation latérale comprend un flasque (11) central portant une pluralité de bras (12) radiaux coopérant latéralement avec la bande de traction (2), les blocs de support étant reliés auxdits bras radiaux, lesdits blocs (3) se prolongeant par une zone d'épaule, prévue pour longer le profil de l'épaule du pneumatique sur lequel le dispositif est monté, lesdites zones d'épaules comportant un agencement de sculptures venues de matière avec le bloc.

7. Dispositif (1) d'aide à la traction selon l'une quelconque des revendications précédentes, dans lequel le flasque (11) porte au moins une tige (13) de fixation à une roue d'un véhicule, et une manette (14) de positionnement permettant de rapprocher ledit flasque (11) de la roue du véhicule.

8. Dispositif (1) d'aide à la traction selon l'une quelconque des revendications précédentes, dans lequel les blocs (3) de support de chaînes sont en élastomère, de préférence en polyuréthane.

## Patentansprüche

1. Traktionshilfevorrichtung (1) zur Anordnung am Umfang eines Laufstreifens eines auf einer Felge montierten Luftreifens, umfassend einen Traktionsstreifen (2), der sich entlang einer Traktionsachse T-T erstreckt und zum Wickeln um den Laufstreifen des Luftreifens herum vorgesehen ist, ein Modul (10) zur seitlichen Befestigung, das dazu ausgelegt ist, den Traktionsstreifen (2) seitlich an der Felge zu befestigen, wobei der Traktionsstreifen eine Mehrzahl von Blöcken (3) zum Stützen von Ketten (5) umfasst, die hintereinander angeordnet sind und auf denen mindestens zwei umfängliche Ketten (5) befestigt sind, wobei die Vorrichtung **dadurch gekennzeichnet ist, dass** mindestens ein Abschnitt der Stützblöcke (3) eine Anordnung (20) aus Profilelementen beinhaltet, die mit mindestens einer Rille (21) und mindestens einem Einschnitt (22) versehen sind, die quer zur Traktionsachse T-T verlaufen und auf der Außenseite (7) der Stützblöcke (3) angeordnet sind und materialeinheitlich mit dem Kettenstützblock (3) sind, und dadurch, dass die Anordnung (20) von Profilelementen auch eine Aneinanderreihung (23) von Profilelementen in Form von Sägezähnen beinhaltet, die auf den Seitenflächen (9) der Stützblöcke ausgestaltet sind.

2. Traktionshilfevorrichtung (1) nach Anspruch 1, bei der die Anordnung (20) von Profilelementen auch eine Aneinanderreihung (25) von Profilelementen in Form von Sägezähnen beinhaltet, die auf der Innenseite (8) der Stützblöcke (3) ausgestaltet sind.

3. Traktionshilfevorrichtung (1) nach einem der Ansprüche 1 oder 2, bei der die Anordnung (20) von Profilelementen auch eine Aneinanderreihung (24) von Profilelementen in Form von Sägezähnen beinhaltet, die auf dem Schulterbereich der Stützblöcke (3) ausgestaltet sind.

4. Traktionshilfevorrichtung (1) nach einem der Ansprüche 1 bis 3, bei der die Ketten (5) mit den Blöcken (3) durch Durchlässe (6) verbunden sind, die in jedem der Blöcke vorgesehen sind.

5. Traktionshilfevorrichtung (1) nach einem der Ansprüche 1 bis 4, bei der Blöcke (4) zur Positionierung der Ketten zwischen zwei Kettenstützblöcke (3) gesetzt sind, wobei die Positionierungsblöcke (4) auch eine Anordnung von Profilelementen beinhalten, die materialeinheitlich mit dem Block ist.

6. Traktionshilfevorrichtung (1) nach einem der vorhergehenden Ansprüche, bei der das Modul (10) zur seitlichen Befestigung einen zentralen Flansch (11) umfasst, der eine Mehrzahl von radialen Armen (12) trägt, die seitlich mit dem Traktionsstreifen (2) zusammenwirken, wobei die Stützblöcke mit den radialen Armen verbunden sind, wobei die Blöcke (3) sich durch einen Schulterbereich fortsetzen, der dazu vorgesehen ist, entlang des Profils der Schulter des Luftreifens, auf dem die Vorrichtung montiert ist, zu verlaufen, wobei die Schulterbereiche eine Anordnung von Profilelementen beinhalten, die materialeinheitlich mit dem Block sind.

7. Traktionshilfevorrichtung (1) nach einem der vorhergehenden Ansprüche, bei welcher der Flansch (11) mindestens eine Stange (13) zur Befestigung an einem Rad eines Fahrzeugs trägt und ein Positionierungsgriff (14) es ermöglicht, den Flansch (11) an das Rad des Fahrzeugs heranzuführen.

8. Traktionshilfevorrichtung (1) nach einem der vorhergehenden Ansprüche, bei der die Kettenstützblöcke (3) aus Elastomer sind, bevorzugt aus Polyurethan.

## Claims

1. Traction assistance device (1) for arrangement on the periphery of a tread of a tyre mounted on a rim, comprising a traction strip (2) extending along a traction axis T-T and designed for winding around the tread of the tyre, a lateral fastening module (10) designed to laterally fasten said traction strip (2) to the rim, said traction strip comprising a plurality of blocks (3) for supporting chains (5), arranged one after the other and to which at least two circumferential chains (5) are fastened, said device being **characterized in that** at least a portion of the support blocks (3) have an arrangement (20) of tread patterns provided with at least one groove (21) and at least one sipe (22) that are transverse to the traction axis T-T and arranged on the outer face (7) of the support blocks (3) and integral with the chain support block (3) and **in that** the arrangement (20) of tread patterns also has an alignment (23) of sawtooth-shaped tread patterns disposed on the lateral face (9) of the support blocks.

2. Traction assistance device (1) according to Claim 1, wherein the arrangement (20) of tread patterns also has an alignment (25) of sawtooth-shaped tread patterns disposed on the internal face (8) of the support blocks (3) .

3. Traction assistance device (1) according to either one of Claims 1 and 2, wherein the arrangement (20) of tread patterns also has an alignment (24) of sawtooth-shaped tread patterns disposed on the shoulder zone of the support blocks (3).

4. Traction assistance device (1) according to any one of Claims 1 to 3, wherein the chains (5) are connected to the blocks (3) by passages (6) provided in each of the blocks.

5. Traction assistance device (1) according to any one of Claims 1 to 4, wherein blocks (4) for positioning the chains are interposed between two blocks (3) for supporting chains, said positioning blocks (4) also having a tread pattern arrangement integral with the block.

6. Traction assistance device (1) according to any one of the preceding claims, wherein the lateral fastening module (10) comprises a central flange (11) bearing a plurality of radial arms (12) cooperating laterally with the traction strip (2), the support blocks being connected to said radial arms, said blocks (3) being extended by a shoulder zone, designed to follow the profile of the shoulder of the tyre on which the device is mounted, said shoulder zones having an arrangement of tread patterns that are integral with the block.

7. Traction assistance device (1) according to any one of the preceding claims, wherein the flange (11) bears at least one rod (13) for fastening to a wheel of a vehicle, and a positioning handle (14) making it possible to move said flange (11) closer to the wheel of the vehicle.

8. Traction assistance device (1) according to any one of the preceding claims, wherein the blocks (3) for supporting chains are made of elastomer, preferably of polyurethane.
